(19) Europäisches Patentamt
European Patent Office
Office européen des brevets

(11) EP 1 477 907 A1

(12) DEMANDE DE BREVET EUROPEEN

(43) Date de publication:
17.11.2004 Bulletin 2004/47

(51) Int Cl.7: G06F 17/18, G06F 17/16

(21) Numéro de dépôt: 04101348.3

(22) Date de dépôt: 01.04.2004

(84) Etats contractants désignés:
AT BE BG CH CY CZ DE DK EE ES FI FR GB GR HU IE IT LI LU MC NL PL PT RO SE SI SK TR
Etats d'extension désignés:
AL LT LV MK

(30) Priorité: 01.04.2003 FR 0304041

(71) Demandeur: Thales
92200 Neuilly Sur Seine (FR)

(72) Inventeurs:
• ALBERA, Laurent, Intellectual Prop. THALES
94117 CX, ARCUEIL (FR)

• FERREOL, Anne, Intellectual Prop. THALES
94117 CX, ARCUEIL (FR)
• CHEVALIER, Pascal, Intellectual Prop. THALES
94117 CX, ARCUEIL (FR)
• COMON, Pierre
94117 CX, ARCUEIL (FR)

(74) Mandataire: Lucas, Laurent Jacques et al
THALES Intellectual Property,
31-33 avenue Aristide Briand
94117 Arcueil Cedex (FR)

(54) Procédé d'identification aveugle de mélanges de sources aux ordres supérieurs

(57) Procédé d'identification aveugle de sources au sein d'un système comportant P sources et N capteurs comportant au moins une étape d'identification de la matrice des vecteurs directeurs des sources à partir de l'information propre aux vecteurs directeurs $\mathbf{a}_p$ des sources contenue de manière redondante dans les statistiques circulaires d'ordre m=2q du vecteur des observations reçues par les N capteurs.
Application à un réseau de communications

FIG.1

**Description**

L'invention concerne notamment un procédé de séparation autodidacte (ou aveugle), n'exploitant aucune information a priori sur les sources ou sur le front d'onde, à l'ordre 4 et aux ordres supérieurs à 4, de P sources cyclostationnaires (déterministes ou stochastiques, analogiques ou numériques, à modulations linéaires ou non linéaires) et statistiquement indépendantes, à partir d'une réception à N capteurs ($N \geq 2$).

Elle s'applique par exemple dans le domaine des radiocommunications, des télécommunications spatiales ou de l'écoute passive de ces liaisons, dans des gammes allant par exemple de la VLF à la EHF).

Elle trouve aussi son application dans des domaines tels que l'astronomie, le biomédical, le radar, le traitement de la parole, etc.

La séparation autodidacte de sources et plus particulièrement l'Analyse en Composantes Indépendantes (ICA) suscitent actuellement beaucoup d'intérêt. Elles trouvent en effet leur place dans de nombreuses applications telles que les télécommunications, le traitement de la parole ou encore le domaine biomédical.

Par exemple, en traitement d'antennes, si un certain nombre de sources émises sont réceptionnées sur un réseau de capteurs, et si pour chaque source l'étalement temporel des canaux associés aux différents capteurs est négligeable devant le temps symbole, alors un mélange instantané des sources émises est observé sur les dits capteurs.

La séparation autodidacte de sources a notamment pour but de restituer les sources supposées statistiquement indépendantes et ce uniquement à partir des observations reçues par les capteurs.

Selon l'application, il est possible de ne retrouver que le mélange instantané, c'est-à-dire les vecteurs directeurs des sources, ce qui est le cas par exemple de la goniométrie où le dit mélange porte à lui seul toute l'information nécessaire à la localisation angulaire des sources : on parle alors d'identification aveugle de mélange.

Pour d'autres applications telles que la transmission, il est nécessaire de retrouver les sources émises : on emploie alors l'expression de *séparation* ou en encore d'extraction aveugle ou autodidacte de sources.

Certaines techniques connues de l'art antérieur cherchent à décorréler (à l'ordre 2) les signaux, comme on peut l'observer en Analyse Factorielle avec l'Analyse en Composantes Principales (PCA).

L'ICA, pour sa part, vise à réduire les dépendances statistiques des signaux également aux ordres supérieurs. De ce fait l'ICA permet d'identifier, de manière autodidacte, le mélange instantané et par la même occasion d'extraire les sources émises dont au plus une est supposée gaussienne. Ceci n'est actuellement possible qu'en respectant certaines hypothèses : le mélange bruité des sources doit être linéaire et par ailleurs surdéterminé (le nombre de sources P doit être inférieur ou égal au nombre de capteurs *N*).

Si Comon introduit le premier le concept d'ICA et propose une solution, COM2 dans la référence **[1]** (les différentes références sont regroupées à la fin de la description), maximisant un contraste basé sur les cumulants d'ordre 4, Cardoso et Souloumiac **[2]**, quant à eux, développent une approche matricielle, plus connue sous le nom de JADE, et donnent ainsi naissance à l'algorithme de diagonalisation conjointe.

Quelques années plus tard, Hyvarinen et al. présentent la méthode FastICA, dans un premier temps pour des signaux réels **[3]**, puis dans le cas complexe **[4]**. Cette dernière introduit un algorithme d'optimisation de contraste baptisé algorithme du point-fixe.

De son côté, Comon propose une solution simple, COM1 **[5],** à l'optimisation du contraste présenté dans **[6]**.

Bien que très performantes sous les hypothèses énoncées précédemment, ces méthodes peuvent être néanmoins très fortement perturbées par la présence de bruit inconnu, Gaussien ou non, corrélé spatialement et inhérent à certaines applications comme les radiocommunications HF.

Par ailleurs, comme il a été dit plus haut, les méthodes précédentes ne sont conçues que pour traiter des mélanges surdéterminés de sources. Or dans la pratique, tel qu'en radiocommunications, la réception de plus de sources que de capteurs n'est pas rare, surtout si la largeur de bande de réception est importante. On est alors en présence de mélanges dit sous-déterminés (*P > N*).

Plusieurs algorithmes ont d'ores et déjà été développés dans le but de traiter ce type de mélanges. Certains abordent le difficile problème de l'extraction des sources **[7-8]** alors que le mélange ne peut plus être inversé linéairement, tandis que d'autres traitent de l'identification de la matrice de mélange **[7] [9-12].**

Les méthodes proposées dans **[9-11]** exploitent uniquement les statistiques d'ordre 4 tandis que celle présentée dans **[12]** rep ose sur l'utilisation de la seconde fonction caractéristique des observations, autrement dit sur l'utilisation des cumulants non nuls de tout ordre. Quant à la méthode employée dans **[7]**, elle repose sur la maximisation de probabilité conditionnelle, en l'occurrence celle des données conditionnellement à la matrice de mélange.

Si ces méthodes sont performantes, elles souffrent d'inconvénients en contexte opérationnel.

Ainsi la méthode **[9]** est difficile à mettre en oeuvre et ne garantit pas l'identification des vecteurs directeurs de sources de même kurtosis. Les méthodes **[10]** et **[11]** ne permettent pas quant à elles d'identifier les vecteurs directeurs de sources circulaires. La méthode **[10]**, baptisée S3C2, pour sa part confine l'utilisateur dans une configuration de 3 sources et 2 capteurs, interdisant tout autre scénario. La méthode **[7]** autorise l'identification de 4 signaux de parole avec seulement 2 capteurs, toutefois les échantillons observés doivent être temporellement indépendants et chaque source doit avoir une densité de probabilité éparse. Pour finir, la méthode **[12]** n'est applicable qu'au cas de sources réelles, ce qui est très restrictif notamment en communications numériques. En outre, l'algorithme dépend grandement du nombre de sources, et rien ne prouve aujourd'hui qu'une mauvaise estimation de ce paramètre ne dégrade pas les performances de la méthode.

La présente invention offre une nouvelle approche reposant notamment sur l'exploitation de la totalité ou pratiquement de la totalité de l'information propre aux vecteurs directeurs **a**p des sources, contenue de manière redondante dans la matrice représentative des statistiques circulaires d'ordre m = 2q du vecteur des enveloppes complexes des signaux en sortie des capteurs.

L'invention concerne un procédé d'identification aveugle de sources au sein d'un système comportant P sources et N capteurs. Il est caractérisé en ce qu'il comporte au moins une étape d'identification de la matrice des vecteurs directeurs des sources à partir de l'information propre aux vecteurs directeurs $a_p$ des sources contenue de manière redondante dans les statistiques circulaires d'ordre m=2q du vecteur des observations reçues par les N capteurs.

Les statistiques circulaires d'ordre m = 2q s'expriment par exemple en fonction d'une matrice diagonale de rang plein des autocumulants des sources et d'une matrice représentant la juxtaposition des vecteurs directeurs des sources de la manière suivante :

$$C_{m,x} = A_q \, \zeta_{m,s} \, A_q^{\mathsf{H}} \tag{11}$$

où $\zeta_{m,\boldsymbol{s}} = \mathrm{diag}([C_{1,1,\dots,1,s}^{1,1,\dots,1} ,\dots, C_{P,P,\dots,P,s}^{P,P,\dots,P}])$ est la matrice diagonale de rang plein des autocumulants $C_{p,p,\dots,p,s}^{p,p,\dots,p}$ d'ordre $m = 2q$ des sources, de taille ($P$ x $P$), et où $\boldsymbol{A}_q = [a_1^{\otimes(q-1)} \otimes a_1^{*} \dots a_p^{\otimes(q-1)} \otimes a_p^{*}]$, de taille ($N^q$ x $P$) et supposée de rang plein, représente la juxtaposition des $P$ vecteurs colonnes $[a_p^{\otimes(q-1)} \otimes a_p^{*}]$. Utilisation du procédé à un réseau de communication et/ou pour de la goniométrie à partir des vecteurs directeurs identifiés.

L'invention présente notamment les avantages suivants :

• Elle permet l'identification autodidacte de mélanges instantanés aussi bien surdéterminés (le nombre de sources est inférieur ou égal au nombre de capteurs) que sous-déterminé (le nombre de sources est supérieur au nombre de capteurs) ainsi que l'extraction aveugle des sources dans le cas surdéterminé ;
• A l'ordre m=2q, pair q≥2, le procédé désigné BIOME (Blind Identification of Over and underdetermined Mixtures of sources) a la capacité de traiter jusqu'à P = N $^{(q-1)}$ sources à partir d'un réseau à N capteurs différents , dès lors que les autocumulants d'ordre m des sources sont de même signe;
• Une application du procédé BIOME à l'ordre 4, nommée ICAR (Independent Component Analysis using Redundancies in the quadricovariance), permet l'identification autodidacte de mélanges instantanés surdéterminés (P ≤ N) de sources et l'extraction aveugle de celles-ci, d'une manière s'avérant robuste vis-à-vis de la présence d'un bruit Gaussien inconnu corrélé spatialement, dès lors que les sources ont des kurtosis (autocumulants normalisés d'ordre 4) de même signe ;
• Une application du procédé BIOME à l'ordre 6, appelée BIRTH (Blind Identification of mixtures of sources using Redundancies in the daTa Hexacovariance matrix), permet l'identification autodidacte de mélanges instantanés aussi bien surdéterminés ($P \le N$) que sous-déterminés ($P > N$) de sources, ainsi que l'extraction aveugle des sources dans le cas surdéterminé. Le procédé BIRTH a la capacité de traiter jusqu'à $N^2$ sources à partir d'un réseau à $N$ capteurs différents, dès lors que les autocumulants d'ordre 6 des sources sont de même signe.

D'autres caractéristiques et avantages du procédé selon l'invention apparaîtront mieux à la lecture de la description qui suit d'un exemple de réalisation non limitatif annexé des figures qui représentent :

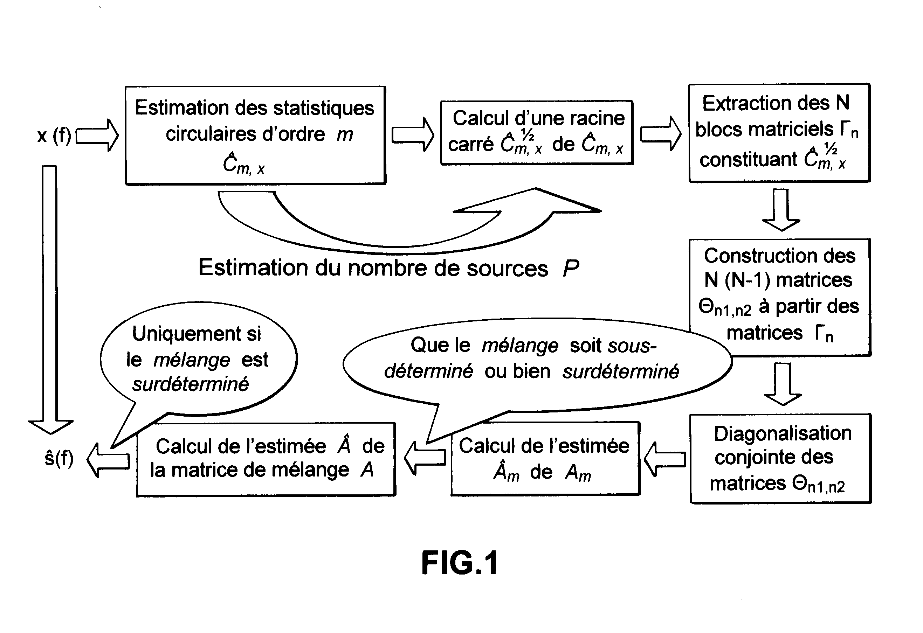

• La figure 1 un schéma d'exemple de mise en oeuvre du procédé à l'ordre m,
• Les figures 2, 3 et 4 des résultats de simulation de la mise en oeuvre du procédé à l'ordre 4,
• Les figures 5, 6, et 8 des résultats de simulation pour le procédé appliqué à l'ordre 6.

Les exemples qui suivent sont donnés pour l'identification et/ou l'extraction de sources dans un réseau comportant une antenne réseau comprenant N capteurs. Cette antenne est supposée recevoir un mélange bruité de P sources par exemple à bande étroite (BE) et statistiquement indépendantes.

Sous ces hypothèses, le vecteur x(t) des enveloppes complexes des signaux en sortie des capteurs s'écrit, à l'instant t

$$x(t) = \sum_{p=1}^{P} s_p(t) \, a_p + \nu(t) = A \, s(t) + \nu(t) \qquad \textbf{(1)}$$

- où $\nu(t)$ est le vecteur bruit, supposé centré, Gaussien, spatialement blanc et inconnu,
- $s_p(t)$ et $a_p$ correspondent respectivement à l'enveloppe complexe, BE, cyclostationnaire et cycloergodique (avec un éventuel résidu de porteuse le cas échéant), et au vecteur directeur de la source p,
- $s(t)$ est le vecteur dont les composantes sont les signaux $s_p(t)$ et $A$ est la matrice (N x P) dont les colonnes sont les vecteurs $a_p$.

Par ailleurs, le procédé énoncé de manière générale ci-après à l'ordre $m = 2\,q$ ($q \geq 2$) utilise les hypothèses suivantes $H_{1\text{-}4}$:

H1 : A tout instant $t$, les sources à valeurs complexes $s_p(t)$ sont cyclostationnaires, cycloergodiques et mutuellement décorrélées à l'ordre $m$;
H2 : A tout instant $t$, les composantes $\nu_n(t)$ du bruit sont stationnaires, ergodiques, gaussiennes et circulaires;
H3 : A tout instant $t$, $s(t)$ et $\nu(t)$ sont statistiquement indépendants ;
H4 : les autocumulants d'ordre $m$ des sources sont non nuls et de même signe.

Avec les hypothèses précédentes, pour un ordre pair $m = 2q$ donné, le problème de l'identification autodidacte de mélanges instantanés de sources consiste à trouver, à partir de l'exploitation de certaines statistiques d'ordre m des observations, la matrice $A$ à une matrice *triviale* près (une matrice triviale est de la forme $\Lambda \Pi$ où $\Lambda$ est une matrice diagonale inversible et $\Pi$ une matrice de permutation).

La séparation (extraction) aveugle de sources, consiste notamment à déterminer le séparateur Linéaire et Invariant dans le Temps (LIT), $W$, de dimension (N x P), dont le vecteur de sortie, de dimension (P x 1),

$$y(t) = W^H \, x(t) \qquad\qquad (2)$$

correspond, à une matrice triviale près, à la meilleure estimée, $\hat{s}(t)$, du vecteur $s(t)$, où le symbole $^H$ signifie transposé conjugué.

Le séparateur $W$ est défini à une matrice triviale près dans la mesure où ni la valeur des puissances de sortie, ni l'ordre dans lequel les sorties sont rangées ne changent la qualité de restitution des sources.

Avant d'exposer les étapes du procédé selon l'invention, quelques rappels sur les statistiques des observations sont donnés.

**Statistiques des observations**

Le procédé selon l'invention utilise notamment les statistiques circulaires d'ordre pair, 2, 4, 6, ..., m des observations.

Selon l'art antérieur décrit dans la référence [15], l'expression des cumulants d'ordre m en fonction des moments d'ordre inférieur à m peut être simplifiée.

Soit $G_{d,\ldots,e,\mathbf{x}}^{f,\ldots,g}$ une quantité scalaire à valeur complexe dépendant des $q$ indices inférieurs $d$, ..., $e$ et des $q$ indices supérieurs $f$, ..., $g$ à valeur dans {1, 2, ..., N}. La quantité $G_{d,\ldots,e,\mathbf{x}}^{f,\ldots,g}$ vérifie alors les trois symétries suivantes :

- toute permutation des indices inférieurs de $G_{d,\ldots,e,x}^{f,\ldots,g}$ entre eux ne modifie pas la valeur de $G_{d,\ldots,e,x}^{f,\ldots,g}$ : par exemple, pour $q = 2$, $G_{e,d,x}^{f,\ldots,g} = G_{d,e,x}^{f,g}$,

- toute permutation des indices supérieurs de $G_{d,\ldots,e,\mathbf{x}}^{f,\ldots,g}$ entre eux ne modifie pas la valeur de $G_{d,\ldots,e,\mathbf{x}}^{f,\ldots,g}$ : par exemple, pour $q = 2$, $G_{d,e,x}^{f,\ldots,g} = G_{d,e,x}^{f,g}$,

- permuter tous les indices supérieurs avec tous les indices inférieurs de $G_{d,\ldots,e,x}^{f,\ldots,g}$ a pour effet de conjuguer la valeur de $G_{d,\ldots,e,x}^{f,\ldots,g}$ : $G_{f,\ldots,g,x}^{f,\ldots,g} =$

$$\left(G_{d,\dots,e,\boldsymbol{x}}^{f,\dots,g}\right)^{*}.$$

D'autre part, la notation suivante est adoptée : la quantité $[\boldsymbol{r}]G_{d,\dots e,x}^{f,\dots,g}\,G_{h,\dots i,\mathbf{x}}^{j,\dots,k}\dots G_{l,\dots,m,\mathbf{x}}^{n,\dots,o}$ désigne la combinaison linéaire des $r$ produits possibles et distincts (module les trois symétries décrites précédemment) de type $G_{d,\dots,e,x}^{f,\dots,g}$ $G_{h,\dots i,x}^{j,\dots,k}\dots G_{l,\dots,m,x}^{n,\dots,o}$, pondérés par la valeur 1. Chacun des $r$ produits est construit à partir du produit $G_{d,\dots e,\mathbf{x}}^{f,\dots,g}\,G_{h,\dots i,\mathbf{x}}^{j,\dots,k}\dots G_{l,\dots,m,\mathbf{x}}^{n,\dots,o}$ en utilisant et en combinant les deux règles de permutation suivantes :

- un indice inférieur d'un des termes du produit $G_{d,\dots e,\mathbf{x}}^{f,\dots,g}\,G_{h,\dots i,\mathbf{x}}^{j,\dots,k}\dots G_{l,\dots,m,\mathbf{x}}^{n,\dots,o}$ permute avec un indice inférieur d'un autre terme du même produit $G_{d,\dots e,\mathbf{x}}^{f,\dots,g}\,G_{h,\dots i,\mathbf{x}}^{j,\dots,k}\dots G_{l,\dots,m,\mathbf{x}}^{n,\dots,o}$ pour donner un autre produit (distinct) : par exemple, pour $(q_1, q_2) = (2, 2)$, $G_{d,e,x}^{f,g}\,G_{h,i,x}^{j,k}$ donne comme autres produits distincts (modulo les trois symétries décrites précédemment) $G_{h,e,x}^{f,g}\,G_{d,i,x}^{j,k}$, $G_{d,i,x}^{f,g}\,G_{h,e,x}^{j,k}$ et $G_{h,i,x}^{f,g}\,G_{d,e,x}^{j,k}$,

- un indice supérieur d'un des termes du produit $G_{d,\dots e,\mathbf{x}}^{f,\dots,g}\,G_{h,\dots i,\mathbf{x}}^{j,\dots,k}\dots G_{l,\dots,m,\mathbf{x}}^{n,\dots,o}$ permute avec un indice supérieur d'un autre terme du même produit $G_{d,\dots e,\mathbf{x}}^{f,\dots,g}\,G_{h,\dots i,\mathbf{x}}^{j,\dots,k}\dots G_{l,\dots,m,\mathbf{x}}^{n,\dots,o}$ pour donner un autre produit (distinct) : par exemple, pour $(q_1, q_2) = (2, 2)$, $G_{d,e,x}^{f,g}\,G_{h,i,x}^{j,k}$ donne comme autres produits distincts (modulo les trois symétries décrites précédemment) $G_{d,e,x}^{j,g}\,G_{h,i,x}^{f,k}$, $G_{d,e,x}^{f,k}\,G_{h,i,x}^{j,g}$ et $G_{d,e,x}^{j,k}\,G_{h,i,x}^{f,g}$,

afin d'obtenir la totalité des $r$ produits possibles et distincts (modulo les trois symétries décrites précédemment). L'exemple suivant, où $(q_1, q_2) = (2, 1)$ et $r = 9$, illustre cette notation :

$$[9]\ G_{d,e,x}^{g,h}\,G_{f,x}^{i} = G_{d,e,x}^{g,h}\,G_{f,x}^{i} + G_{d,f,x}^{g,h}\,G_{e,x}^{i} + G_{f,e,x}^{g,h}\,G_{d,x}^{i} + G_{d,e,x}^{g,i}\,G_{f,x}^{h}$$
$$+ G_{d,e,x}^{i,h}\,G_{f,x}^{g} + G_{d,f,x}^{g,i}\,G_{e,x}^{h} + G_{d,f,x}^{h,i}\,G_{e,x}^{g} + G_{f,e,x}^{g,i}\,G_{d,x}^{h} + G_{f,e,x}^{i,h}\,G_{d,x}^{g} \tag{3}$$

### Statistiques d'ordre $m$

Dans le cas de sources stationnaires ou cyclostationnaires potentiellement non centrées, les statistiques circulaires d'ordre m du vecteur $\boldsymbol{x}(t)$, donné par (1), s'écrivent

$$C_{i_1,i_2,\dots i_q,\mathrm{x}}^{i_{q+1},i_{q+2},\dots i_m} = < C_{i_1,i_2,\dots i_q,\mathrm{x}}^{i_{q+1},i_{q+2},\dots i_m} > \mathrm{c} \tag{4}$$

où le symbole

$$< f(t) >_{c} = \lim_{T\to\infty}(1/T)\int_{-T/2}^{T/2} f(t)dt$$

correspond à l'opération de moyennage temporel en temps continu de $f(t)$ sur un horizon d'observation infini.

$$C_{i_1,i_2,\dots i_q,\mathrm{x}}^{i_{q+1},i_{q+2},\dots i_m}(t) = \mathrm{Cum}(x_{i_1}(t),x_{i_2}(t),\dots,x_{i_q}(t),x_{i_{q+1}}(t)^{*},x_{i_{q+2}}(t)^{*},\dots,x_{i_m}(t)^{*}) \tag{5}$$

où $q$ termes sont conjugués et $q$ termes sont non conjugués.

Les statistiques d'ordre $m$ décrites par l'expression (5) sont dites circulaires car le cumulant $\mathrm{Cum}\{x_d(t),\ x_e$

$(t),..., x_f(t), x_g(t)^*, x_h(t)^*,..., x_i(t)^*\}$ d'ordre $m$ est calculé à partir d'autant de termes conjugués $(x_g(t)^*, x_h(t)^*, ..., x_i(t)^*)$ que de termes non conjugués $(x_d(t), x_e(t), ..., x_f(t))$.

Les cumulants circulaires d'ordre m peuvent être exprimés en fonction de moments d'ordre inférieur à m de la manière donnée ci-après.

Soient $M^{i_{q+1},i_{q+2},...i_m}_{i_1,i_2,...i_q,\mathbf{x}}(t)$ et $C^{i_{q+1},i_{q+2},...i_m}_{i_1,i_2,...i_q,\mathbf{x}}(t)$ les moments et cumulants circulaires d'ordre m associés au vecteur d'observation $\mathbf{x}(t)$, définis par :

$$M^{i_{q+1},i_{q+2},...i_m}_{i_1,i_2,...i_q,\mathbf{x}}(t) = \mathrm{E}[x_{i_1}(t),x_{i_2}(t),...,x_{i_q}(t),x_{i_{q+1}}(t)^*,x_{i_{q+2}}(t)^*,...,x_{i_m}(t)^*]$$

$$C^{i_{q+1},i_{q+2},...i_m}_{i_1,i_2,...i_q,\mathbf{x}}(t) = \sum_{k=1}^{m}(-1)^{k-1}(k-1)!\sum_{g=1}^{G_k}\prod_{S_g^k \in Part_{g,\mathbf{x}}^k}M\left[S_g^k\right](t)$$

$$Part_{g,\mathbf{x}}^k = \left\{S_{g,\mathbf{x}}^k(1)\bigcup S_{g,\mathbf{x}}^k(1)\bigcup...\bigcup S_{g,\mathbf{x}}^k(k)\right\}$$

désigne la « g »-ième partition, parmi « $G_k$ »possibles, de « k » sous-ensembles $S_{g,x}^k = {}^{i_u,i_v,...,i_w}_{i_r,i_s,...,i_t,\mathbf{x}}$, où $1 \leq r \neq s \neq ... \neq t$ $\leq q$ et $q+1 \leq u \neq v \neq ... \neq w \leq m$, telle que $Part_{g,x}^k = {}^{i_{q+1},i_{q+2},...i_m}_{i_1,i_2,...i_q,\mathbf{x}}$. Quant à l'opérateur union, noté$\bigcup$ , il vérifie

$${}^{i_p,i_r,...,i_s}_{i_j,i_h,...,i_o,\mathbf{x}}\bigcup {}^{i_w,i_y,...,i_z}_{i_t,i_u,...,i_v,\mathbf{x}}={}^{i_p,i_r,...,i_s,i_w,i_y,...,i_z}_{i_j,i_h,...,i_o,i_t,i_u,...,i_v,\mathbf{x}}.$$

De manière pratique, deux grandes familles d'estimateurs peuvent être utilisées pour estimer les statistiques précédentes : dans le cas de sources stationnaires, on peut employer un estimateur empirique non biaisé et consistant pour des sources stationnaires, ergodiques, potentiellement centrées alors que dans le cas de sources cyclostationnaires potentiellement non centrées, il faut employer un estimateur dit exhaustif, non biaisé et consistant pour des sources cyclostationnaires, cycloergodiques, potentiellement non centrées. Cet estimateur exhaustif est par exemple déterminé selon une démarche décrite dans les références **[13-14]**.

**Agencement et stockage des statistiques d'ordre m**

Comme il est montré ci-dessus les statistiques $C^{g,h,...,k}_{d,e,...,f,\mathbf{x}}$, pour $1 \leq d, e, ..., f, g, h, ..., k \leq N$ sont des fonctions à $m = 2q$ entrées ($m$ pair), il alors possible de les ranger dans une matrice ($N^q$ x $N^q$) que l'on nommera $\boldsymbol{C}_{m,\boldsymbol{x}}$.

De manière explicite, la quantité $C^{g,h,...,k}_{d,e,...,f,\mathbf{x}}$ se trouve située à la $i$-ème ligne et à la $j$-ème colonne de la matrice $\boldsymbol{C}_{m,\boldsymbol{x}}$ en posant $i = N[...N[N(d-1)+e-1]+ ...]+k$ et $j = N[ ...N[N(g-1) + h-1]+ ...]+f$.

**Agencement et statistiques d'ordre 4**

Dans le cas de sources stationnaires centrées, les statistiques circulaires d'ordre 4 du vecteur $\boldsymbol{x(t)}$, donné par **(1)**, s'écrivent

$$C^{f,g}_{d,e,x} = \mathrm{Cum}\{x_d(t), x_e(t), x_f(t)^*, x_g(t)^*\} = M^{f,g}_{d,e,x} - M_{d,e,x}M^{f,g}_x - [2]M^f_{d,x}M^g_{e,x} \qquad (4)'$$

De manière pratique, ces statistiques peuvent être estimées en employant un estimateur empirique non biaisé et consistant pour des sources stationnaires, ergodiques, centrées.

Dans le cas de sources cyclostationnaires potentiellement non centrées, les statistiques circulaires d'ordre 4 du vecteur $x(t)$ à prendre en considération, s'écrivent

$$C_{d,e,x}^{f,g} = \; < \text{Cum}\{x_d(t), x_e(t), x_f(t)^*, x_g(t)^*\} >_c \; = \; < M_{d,e,x}^{f,g}(t) >_c - [4] \, M_{d,x}(t) \, M_{e,x}^{f,g}(t)$$

$$>_c - < M_{d,e,x}(t) \, M_x^{f,g}(t) >_c - [2] M_{d,x}^f(t) \, M_{e,x}^g(t) >_c + 2 < M_{d,x}(t) \, M_{e,x}(t) \, M_x^{f,g}(t)$$

$$>_c + 2 < M_x^f(t) \, M_x^g(t) \, M_{d,e,x}(t) >_c + 2 < [4] \, M_{d,x}(t) \, M_x^f(t) \, M_{e,x}^g(t) >_c - 6 <$$

$$M_{d,x}(t) \, M_{e,x}(t) \, M_x^f(t) \, M_x^g(t) >_c \tag{5'}$$

De manière pratique, ces statistiques d'ordre 4 peuvent être estimées en employant l'estimateur dit exhaustif non biaisé et consistant pour des sources cyclostationnaires, cycloergodiques, potentiellement non centrées. Cet estimateur exhaustif est décrit dans **[13-14].**

Comme il est montré ci-dessus les statistiques $C_{d,e,x}^{f,g}$, pour $1 \leq d, e, f, g \leq N$ sont des fonctions à quatre entrées, il alors possible de les ranger dans une matrice ($N^2$ x $N^2$) que l'on nommera matrice de *quadricovariance* $Q_x$ donnée par exemple dans la référence **[13-14].**

### Agencement et Statistiques d'ordre 6

Dans le cas de sources stationnaires centrées, les statistiques circulaires d'ordre 6 du vecteur $x(t)$, donné par **(1)**, s'écrivent

$$C_{d,e,f,x}^{g,h,i} = \text{Cum}\{x_d(t), x_e(t), x_f(t), x_g(t)^*, x_h(t)^*, x_i(t)^*\} = M_{d,e,f,x}^{g,h,i} - [3] \, M_{d,e,f,x}^g \, M_x^{h,i} -$$

$$[9] \, M_{d,e,x}^{g,h} \, M_{f,x}^i - [3] \, M_{d,e,x} \, M_{f,x}^{g,h,i} + 2[9] \, M_{d,e,x} \, M_{f,x}^g \, M_x^{h,i} + 2[6] \, M_{d,x}^g \, M_{e,x}^h \, M_{f,x}^i \tag{6}$$

En pratique, ces statistiques peuvent être estimées en employant un estimateur empirique non biaisé et consistant pour des sources stationnaires, ergodiques, centrées.

Dans le cas de sources cyclostationnaires centrées, les statistiques circulaires d'ordre 6 du vecteur $x(t)$, donné par (1), s'écrivent

$$C_{d,e,f,x}^{g,h,i} = \; < \text{Cum}\{x_d(t), x_e(t), x_f(t), x_g(t)^*, x_h(t)^*, x_i(t)^*\} >_c \; = \; < M_{d,e,f,x}^{g,h,i}(t) > c \; - <$$

$$[3] \, M_{d,e,f,x}^g(t) \, M_x^{h,i}(t) >_c - < [9] \, M_{d,e,x}^{g,h}(t) \, M_{f,x}^i(t) >_c - < [3] \, M_{d,e,x}(t) \, M_{f,x}^{g,h,i}(t) >_c + 2 <$$

$$[9] \, M_{d,e,x}(t) \, M_{f,x}^g(t) \, M_x^{h,i}(t) >_c + 2 < [6] \, M_{d,x}^g(t) \, M_{e,x}^h(t) \, M_{f,x}^i(t) >_c \tag{7}$$

De manière pratique, ces statistiques d'ordre 6 peuvent être estimées en employant un estimateur dit exhaustif non biaisé et consistant pour des sources centrées cyclostationnaires, cycloergodiques.

Comme il est montré ci-dessus les statistiques $C_{d,e,f,x}^{g,h,k}$, pour $1 \leq d, e, f, g, h, k \leq N$ sont des fonctions à six entrées, il alors possible de les ranger dans une matrice ($N^3$ x $N^3$) que l'on nommera matrice *d'hexacovariance* $H_x$.

### Principe mis en oeuvre dans le procédé selon l'invention

Le procédé selon l'invention utilise notamment une propriété de multilinéarité des cumulants et la gaussianité du bruit qui se traduisent par l'expression matricielle suivante

$$C_{m,x} = [A^{\otimes(q-1)} \otimes A^*] \, C_{m,s} [A^{\otimes(q-1)} \otimes A^*]^{\mathsf{H}} \tag{10}$$

où $C_{m,x}$ et $C_{m,s}$ sont les matrices des statistiques d'ordre $m$, définies précédemment, de taille respective ($N^q$ x $N^q$) et ($P^q$ x $P^q$), et associées aux vecteurs $x(t)$ et $s(t)$ où $A^{\otimes(q-1)}$ correspond à une notation adoptée définie ainsi : la matrice $B^{\otimes k}$ désigne la matrice $B$ élevée à la puissance (au sens du produit de Kronecker) $k$, c'est-à-dire en effectuant le produit de Kronecker

$$B^{\otimes k} = \underbrace{B \otimes B \otimes \ldots \otimes B}_{k \text{ fois}},$$

en posant $B \otimes^0 = 1$.

Rappelons dès lors quelle est la définition du produit de Kronecker : soient $A$ et $B$ deux matrices de taille respective ($L_A$ x $C_A$) et ($L_B$ x $C_B$), le produit de kronecker $D = A \otimes B$ est une matrice de taille ($L_A L_B$ x $C_A C_B$) définie par $D = (A_{ij} B)1 \leq i \leq LA$, $1 \leq j \leq CA$.

Sans sortir du cadre de l'invention d'autres écritures associées à d'autres rangements des cumulants peuvent être utilisées :

$$C_{m,x} = [A^{\otimes(q-1)}] \, C_{m,s,l} [A^{\otimes q}]^H \qquad (10 \text{ bis})$$

où l est choisi arbitrairement entre 1 et q et où $C_{m,s,l}$ est la matrice des statistiques d'ordre m = 2q de s(t) associée à l'indice 1 choisi. Chaque écriture conditionne le nombre de sources potentiellement identifiables à partir d'un réseau donné.

Par souci de simplification, dans la suite de la description, l'analyse est donnée en utilisant l'écriture de la relation (10). Dans la mesure où les sources sont indépendantes, la matrice des statistiques d'ordre m associée aux sources, $C_{m,s}$, est une matrice diagonale. Néanmoins, elle s'avère ne pas être de rang plein. Le procédé selon l'invention considère une matrice déterminée à partir d'une matrice diagonale de rang plein des autocumulants et de la matrice représentant la juxtaposition des P vecteurs colonnes relatifs aux vecteurs directeurs des sources :

$$C_{m,x} = A_q \, \zeta_{m,s} \, A_q^{\ H} \qquad (11)$$

où $\zeta_{m,s} = \text{diag}([C_{1,1,\ldots,1,s}^{1,1,\ldots,1} ,\ldots, C_{P,P,\ldots,P,s}^{P,P,\ldots,P}])$ est la matrice diagonale de rang plein des autocumulants $C_{p,p,\ldots,p,s}^{p,p,\ldots,p}$ d'ordre m = 2q des P sources, de taille (P x P), et où $A_q = [a_1^{\otimes(q-1)} \otimes a_1^* \ldots a_p^{\otimes(q-1)} \otimes a_p^*]$, de taille ($N^q$ x P) et supposée de rang plein, représente la juxtaposition des P vecteurs colonnes $[a_p^{\otimes(q-1)} \otimes a_p^*]$. De plus, nous supposons que la matrice $A_{q-1} = [a_1^{\otimes(q-2)} \otimes a_1^* \ldots a_p^{\otimes(q-2)} \otimes a_p^*]$, de taille ($N^{(q-1)}$ x P), est également de rang plein.

Le procédé selon l'invention permet avantageusement d'exploiter et d'extraire par exemple la totalité de l'information propre aux vecteurs directeurs $a_p$ des sources, contenue de manière redondante dans la matrice des statistiques circulaires d'ordre m = 2q du vecteur d'observations $x(t)$, $C_{m,x}$ et plus particulièrement dans la matrice $A_q$.

Le procédé comporte par exemple les étapes décrites ci-après. L échantillons du vecteur $x(t)$ sont supposés avoir été observés et la matrice $C_{m,x}$ est supposée avoir été estimée à partir de ces échantillons.

**Etape 1** : décomposer en valeurs singulières la matrice $C_{m,x}$

Calculer la racine carrée $C_{m,x}^{1/2}$ de $C_{m,x}$ de rang plein, par exemple en décomposant en éléments propres la matrice hermitienne $C_{m,x} = E_s L_s E_s^{H}$ où $L_s$ et $E_s$ sont respectivement la matrice diagonale des P plus grandes (en valeur absolue) valeurs propres réelles de $C_{m,x}$ et la matrice des vecteurs propres orthonormés associés. Cette étape fait apparaître le lien existant entre $C_{m,x}^{1/2}$ et $A_q$ :

$$C_{m,x}^{1/2} = E_s \left| L_s \right|^{1/2} = A_q \zeta_{m,s}^{1/2} V^H = \left[ a_1^{\otimes(q-1)} \otimes a_1^* \ldots a_p^{\otimes(q-1)} \otimes a_p^* \right] \zeta_{m,s}^{1/2} V^H \quad \textbf{(12)}$$

où $V$ est une matrice unitaire, de taille (P x P), unique pour $L_s$ et $E_s$ données, et où $|L_s|^{1/2}$, $\xi_{m,s}^{1/2}$ sont des racines carrées respectivement de $|L_s|$ et $\zeta_{m,s}$ ($|.|$ désigne l'opérateur valeur absolue).

$L_s$ et $E_s$ sont par exemple respectivement la matrice diagonale des P plus grandes (en valeur absolue) valeurs propres réelles de $C_{m,x}$ et la matrice des vecteurs propres orthonormés associés.

Pour une matrice $A_q$ de rang plein, il est possible de vérifier que l'hypothèse **(H4)** équivaut à supposer les éléments diagonaux de $L_s$ non nuls et de même signe.

**Etape 2**

Extraire de la matrice $C_{m,x}$ , $^{1/2}= [\Gamma_{1T}, ..., \Gamma_{NT}]^T$ les $N$ blocs matriciels $\Gamma_n$ : chaque bloc $\Gamma_n$ de taille ($N^{(q-1)}$ x $P$) est constitué des $N^{(q-1)}$ lignes successives de $C_{m,x}$ , $^{1/2}$ à compter de la « $N^{(q-1)}$ ($n$-1)+1 »-ième.

**Etape 3**

Construire les $N(N-1)$ matrices $\Theta_{n1,n2}$ définies, pour tous $1 \le n_1 \neq n_2 \le N$, par $\Theta_{n1,n2} = \Gamma EQ_{n1} ,^{\#} \Gamma_{n2}$ où # désigne l'opérateur de pseudoinversion. En notant pour tout $1 \le n \le N$, $\Phi_n = \text{diag}([A_{n1}, A_{n2}, ..., A_{nP}])$ où $A_{ij}$ est la composante de $A$ située à la $i$-ième ligne et $j$-ième colonne, on a l'égalité $\Gamma_n = A_{(q-1)} \Phi_n \zeta_{m,s} ,^{1/2} V^H$ pour tout $1 \le n \le N$, et le fait que la matrice $V$ diagonalise conjointement les $N(N-1)$ matrices $\Theta_{n1,n2} = \Gamma_{n1} ,^{\#} \Gamma_{n2} = V \zeta_{m,s} ,^{-1/2} \Phi_{n1} ,^{-1} \Phi_{n2}$ $\zeta_{m,s} ,^{1/2} V^H$, qui rappelons-le, sont de taille ($P$ x $P$).

**Etape 4**

Déterminer la matrice $V_{sol}$, solution au problème de diagonalisation conjointe des N(N-1) matrices $\Theta_{n1,n2}$ par exemple en utilisant une méthode de diagonalisation décrite dans la référence **[2]**. La matrice $C_{m,x} ^{1/2} V_{sol}$, où $V_{sol} = V T$ est une matrice unitaire diagonalisant conjointement les matrices $\Theta_{n1,n2}$ à une matrice $T$ triviale unitaire près est une estimée de la matrice $A_q$ à une matrice triviale près.

Différentes méthodes connues de l'Homme du métier permettent d'extraire de $A_q$ une estimée $\hat{A}$ de la matrice de mélange $A$.

**Etape 5**

**Etape 5A**

Une manière de procéder consiste par exemple à moyenner les $K = N^{(q-1)}$ blocs $(\sum_k)^*$ de taille ($N$ x $P$) (pour tout $1 \le k \le N^{(q-1)}$ (le bloc $\sum_k$ est constitué des $N$ lignes successives de $A_q = [\sum_1^T, ..., \sum_K^T]^T$ à compter de la « $N$ ($k$-1) +1 »-ième), ou bien de n'en retenir qu'un seul, par exemple $(\sum_1)^*$. Cette approche permet d'estimer, dans le désordre et à une amplitude près, les $P$ vecteurs directeurs $a_p$ et donc, à une matrice triviale près, la matrice de mélange $A$.

**Etape 5B**

Une autre manière consiste par exemple, pour chacune des $P$ colonnes $b_p$ de

$$A_q = \left[ a_1^{\otimes(q-1)} \otimes a_1^* ..... a_p^{\otimes(q-1)} \otimes a_p^* \right],$$

• extraire les $K = N^{(q-2)}$ vecteurs $b_p(k)$ empilés les uns en dessous des autres tels que :

$$b_p = \left[ a_p^{\otimes(q-1)} \otimes a_p^* \right] = [b_p(1)^T, b_p(2)^T, ..., b_p(K)^T]^T \qquad \textbf{(14)}$$

puis

• convertir les dits vecteurs colonne $b_p(k) = (A_{ip}... A_{jp}) [a_p \otimes a_p, ^*]$ de taille ($N^2$ x 1) en matrice $B_p(k) = (A_{ip}... A_{jp}) [a_p a_p ,^H]$ (où $1 \le i, j \le N$) de taille ($N$ x $N$) et
• décomposer conjointement ces $K = N^{(q-2)}$ matrices en valeurs singulières (SVD) : le vecteur propre commun aux $K$ matrices $B_p(k)$ et associé à la plus forte (en module) valeur propre, est donc un vecteur colonne de la matrice $A$. A noter que la quantité ($A_{ip}... A_{jp}$) est dans le cas présent le produit de ($q - 2$) composantes de $A$.

Cette étape de traitement sur les $P$ colonnes $b_p$ de $A_q$, permet d'estimer, dans le désordre et à une phase près, les $P$ vecteurs directeurs $a_p$ et donc, à une matrice triviale unitaire près, la matrice de mélange $A$.

**Etape 6**

La matrice de mélange A représentative des vecteurs directeurs des sources contient à elle seule l'information nécessaire à la localisation angulaire des sources. Dans ce contexte, à partir de l'estimée des différentes colonnes de A, il est possible de mettre en oeuvre une méthode arbitraire de goniométrie exploitant cette information. Une telle méthode est par exemple présentée dans le document [18].

**Etape 7**

Pour estimer le vecteur de sources s(t), en contexte surdéterminé (i.e. lorsque $P \leq N$), le procédé applique aux observations $x(t)$ un filtre de type LIT utilisant explicitement l'estimée de la matrice de mélange $A$. On peut par exemple choisir le filtre FAS décrit dans la référence **[17]**, optimal en présence de sources décorrélées.
Le procédé comporte par exemple une **étape 0**, qui consiste à construire, à partir des différents vecteurs d'observations $x(t)$, une estimée $\hat{C}_{m,x}$ de la matrice de statistiques $C_{m,x}$ des observations, selon la méthode donnée précédemment. Dans ce cas les étapes 1 à 6 du procédé sont mises en oeuvre sur l'estimée $\hat{C}_{m,x}$ de la matrice.

**Critère de performance**

Selon une variante de réalisation, le procédé comporte une étape utilisant un nouveau critère de performances pour l'évaluation d'identification aveugle de mélange. Ce critère n'est pas global et permet d'évaluer la qualité d'identification de chaque vecteur directeur estimé : on peut alors comparer deux méthodes distinctes d'identification aveugle vis à vis de chaque vecteur directeur, et donc de chaque source. Ce critère est l'extension à l'identification aveugle de mélange du critère basé sur le SINR (rapport signal sur bruit) donné dans la référence **[17]** introduit pour l'extraction aveugle de sources. C'est un $P$-uplet décrit par

$$D(A, \hat{A}) = (\alpha_1, \alpha_2, .....\alpha_P) \tag{15}$$

où

$$\alpha_p = \min_{1 \leq i \leq P} [d(a_p, \hat{a}_{i,})] \tag{16}$$

et où d($u,v$) est la pseudodistance entre les vecteurs **u** et **v**, définie par

$$d(u, v) = 1 - |\langle u,v \rangle|^2 \|u\|^{-2}\|v\|^{-2} \tag{17}$$

Notons que < . , . > désigne le produit scalaire défini pour deux vecteurs de même dimension.
Le procédé décrit pour l'ordre m = 2q s'applique notamment pour les statistiques à l'ordre 4 et les statistiques à l'ordre 6 par exemple selon les exemples donnés ci-après.

**Application de la méthode pour la séparation aveugle de sources à l'ordre 4**

Une variante de réalisation du procédé dénommée ICAR (*Independent Component Analysis using Redundancies in the quadricovariance*) exploite les statistiques d'ordre $m = 4$ (q = 2), correspondant à la matrice de quadricovariance circulaire des observations Cm,x, notée $Q_x$). Ce procédé permet l'identification aveugle du mélange instantané $A$ ou l'extraction autodidacte des sources $s(t)$ dans le cas où $N \geq P$, autrement dit uniquement lorsque le mélange est surdéterminé.
Le modèle **(1)** est supposé vérifié ainsi que les hypothèses $H_{1-4}$ à l'ordre 4. Le procédé dénommé ICAR exploite notamment l'expression (11) qui traduite pour des statistiques d'ordre 4 s'exprime :

$$Q_x = A_2 \zeta_{4,s} A_2H \tag{18}$$

où $\zeta_{4,\boldsymbol{s}} = \mathrm{diag}([C_{1,1s}^{1,1},..., C_{P,P,s}^{P,P}])$ est la matrice de rang plein des autocumulants $C_{p,p,s}^{p,p}$ d'ordre 4 des sources, de taille $(P \times P)$, et où $\boldsymbol{A}_2 = [a_1 \otimes a_1^* ..... a_p \otimes a_p^*]$, de taille ($N^2 \times P$) et supposée de rang plein, représente la juxtaposition des $P$ vecteurs colonnes $[a_p \otimes a_p^*]$. De plus, en supposant que la matrice de mélange $\boldsymbol{A}$, de taille ($N \times P$), est également de rang plein.

Le procédé effectue par exemple les étapes 0 à 5 décrites dans le cas de l'application à l'ordre m=2q, en utilisant les paramètres suivants : Cm,x = $\boldsymbol{Q}_x$ et $\zeta_{m,\boldsymbol{s}} = \zeta_{4,\boldsymbol{s}}$

Dans cet exemple de mise en oeuvre, le procédé peut aussi comprendre une étape 0 qui consiste à : construire, à partir des différents vecteurs d'observations $\boldsymbol{x}(t)$, une estimée $Qx$ la matrice de quadricovariance $\boldsymbol{Q}_x$ des observations. Les étapes 1 à 6 sont ensuite déroulées sur cette valeur estimée.

## Exemples de résultats obtenus en appliquant la méthode à l'ordre 4

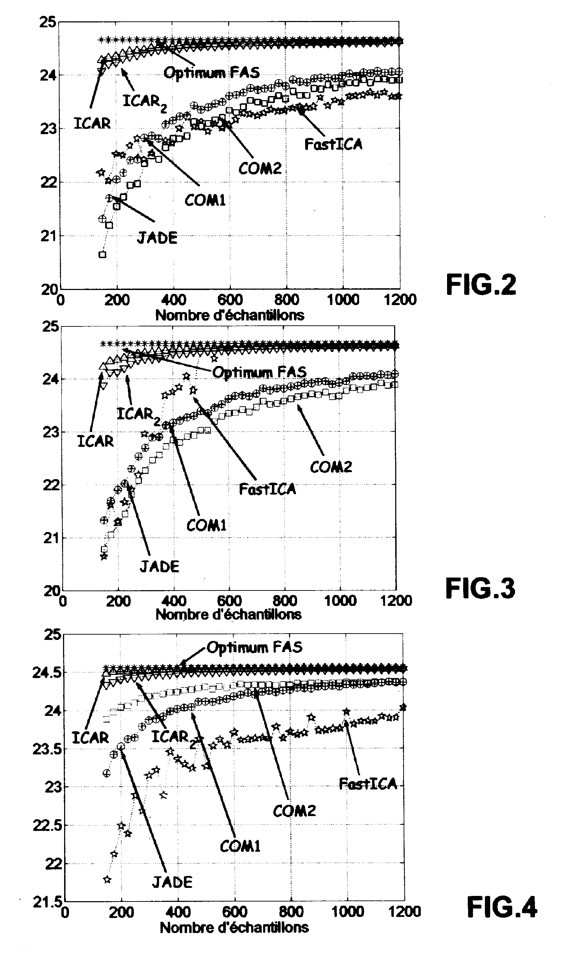

Les figures 2, 3 et 4 représentent dans un diagramme où l'abscisse correspond au nombre d'échantillons L et l'ordonnée aux performances, des résultats de simulation présentant les performances du procédé selon l'invention à l'ordre 4 présenté ci-dessus d'ICAR (en mettant en oeuvre l'étape 5B), ICAR$_2$ (en mettant en oeuvre l'étape 5A) et des méthodes de séparation aveugle de sources (COM 1, COM2, JADE, FastICA) connues de l'Homme du métier. Les conditions de simulation sont les suivantes :

- $P$ = 3 sources non filtrées, une BPSK et deux QPSK, sont supposées être réceptionnées sur un réseau circulaire de $N$ = 5 capteurs tel que $R/\lambda$ = 0.55 (avec $R$ et $\lambda$ le rayon du réseau et la longueur d'onde) et tel que le rapport signal sur bruit, noté SNR, soit égal à 20 dB pour chaque source.
- Le bruit est Gaussien et non corrélé spatialement.
- Les trois sources sont en bande de base et leur temps symbole est choisi égal au temps d'échantillonnage.
- Le critère employé pour apprécier au mieux les résultats d'extraction de la source p pour une méthode donnée est le rapport signal sur bruit plus brouilleur maximal associé à la source p, plus connu sous le dénominatif de $SINRM_p$ [17]. Il peut alors être comparé au $SINRM_p$ optimal calculé en utilisant non pas la matrice de mélange estimée mais au contraire la matrice de mélange exacte ainsi que les statistiques exactes des observations. C'est cette comparaison qui est présentée dans les figures 2-4.

Plus particulièrement, la figure 2 représente les SINRM de la source 1 associés à ICAR, ICAR$_2$ mais aussi aux méthodes de séparation aveugle de sources les plus performantes actuellement telles que JADE, COM1, COM2 et FastICA.

La figure 3 représente le SINRM de la source 2 pour les mêmes méthodes (ICAR, ICAR2, JADE, COM1, COM2, FastICA) et la figure 4 ceux de la source 3.

Sur chacune des trois figures, apparaît le fait que les deux méthodes ICAR et ICAR$_2$ ont des performances très bonnes et légèrement meilleures que les autres méthodes JADE, COM1, COM2 et FastICA. Quant à l'algorithme FastICA, sa meilleure performance concerne la source 2 pour laquelle il converge complètement à partir de 550 échantillons.

Quant à la différence de résultat entre ICAR et ICAR$_2$ elle s'avère dans cette configuration être négligeable devant l'écart de performance entre les méthodes ICAR et les méthodes JADE, COM1, COM2 et FastICA, toutefois très bonnes.

## Application du procédé à l'ordre 6

Selon une autre variante de réalisation, le procédé utilise les statistiques à l'ordre 6. Cette variante dénommée BIRTH (*Blind Identification of mixtures of sources using Redundancies in the daTa H exacovariance matrix*) permet à partir d'un réseau de $N$ capteurs d'identifier les vecteurs directeurs d'au plus $P = N^2$ sources (cas d'un réseau à capteurs différents). Elle permet également l'extraction d'au plus $P = N$ sources dont les vecteurs directeurs sont explicitement identifiés.

Le procédé BIRTH utilise certaines statistiques d'ordre 6, stockées dans la matrice d'hexacovariance C6,x désignée $\boldsymbol{H_x}$. Ainsi, cette variante de mise en oeuvre exploite pleinement l'information propre au mélange instantané $\boldsymbol{A}$ des sources, contenue dans $\boldsymbol{H_x}$, notamment grâce à une astucieuse écriture de $\boldsymbol{H}_x$ par rapport aux vecteurs directeurs des sources, et ce au moyen de la propriété de multilinéarité des cumulants :

$$H_x = A_3 \, \zeta_{6,s} \, \mathrm{A}_3^H \qquad\qquad (20)$$

où $\zeta_{6,s}$ = diag([$C_{1,1,1,s}^{1,1,1}$ ,..., $C_{P,P,P,s}^{P,P,P}$ est la matrice de rang plein des autocumulants $C_{p,p,p,s}^{p,p,p}$ d'ordre 6 des sources, de taille ($P$ x $P$), et où

$A_3 = [a_1^{\otimes 2} \otimes a_1^* ... a_p^{\otimes 2} \otimes a_p^*]$, de taille ($N^3$ x $P$) et supposée de rang plein, représente la juxtaposition des $P$ vecteurs colonnes $[a_p^{\otimes 2} \otimes a_p^*] = [a_p \otimes a_p \otimes a_p^*]$. De plus, nous supposons que la matrice $A_2 = [a_1 \otimes a_1^* ..... a_p \otimes a_p^*]$, de taille ($N^2$ x $P$), est également de rang plein.

Le procédé à l'ordre 6 comporte les étapes 1 à 6 et l'étape 0 décrites ci-dessus en utilisant les paramètres suivants : $\mathbf{C}_{m,x} = H_x$ et m=3.

**Simulations**

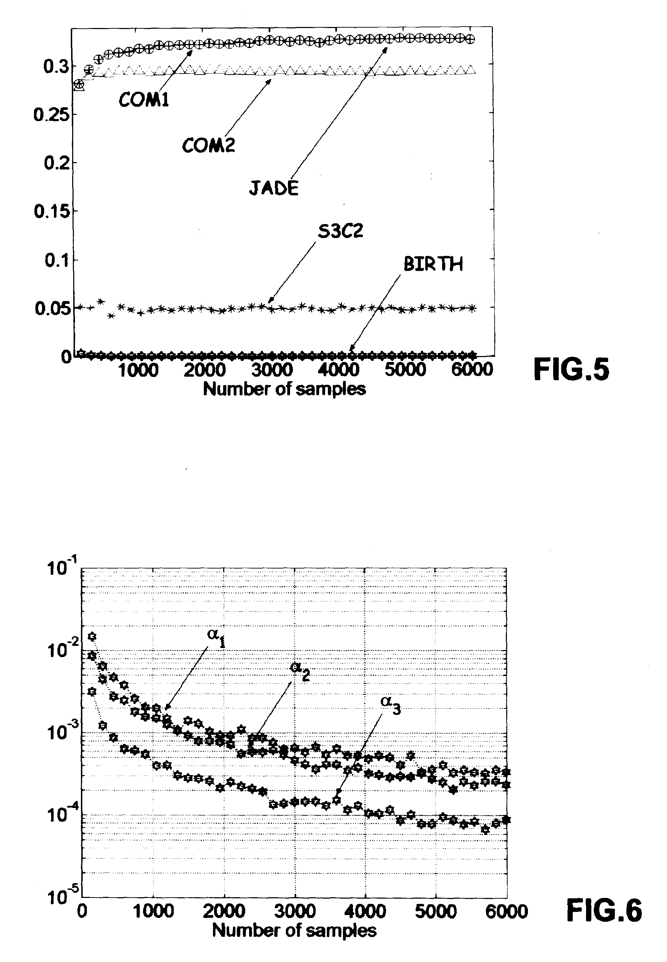

Les figures 5, 6, 7 et 8 représentent dans un diagramme où l'abscisse correspond au nombre d'échantillons L et l'ordonnée aux performances, le bon fonctionnement du procédé selon l'invention à l'ordre 6. Les conditions d'obtention des courbes sont les suivantes :

- supposons que $P$ = 3 sources statistiquement indépendantes, plus particulièrement deux QPSK et une BPSK toutes trois non filtrées, sont reçues sur un réseau linéaire de $N$ = 2 capteurs tel que $R / \lambda$ = 0.55 (avec $R$ et $\lambda$ étant respectivement le rayon du réseau et la longueur d'onde).
- Les trois sources, supposées synchronisées, ont même rapport signal sur bruit, noté SNR et égal à 20 dB pour chaque source avec pour temps symbole quatre fois le temps d'échantillonnage.
- La BPSK est choisie en bande de base, alors que les deux QPSK ont des porteuses respectivement égales à la moitié et au tiers de la fréquence d'échantillonnage.
- La matrice de mélange $A$ est choisie de manière à ce que les vecteurs colonnes de la matrice $A_3$ soient linéairement indépendants. Le bruit est quant à lui Gaussien et non corrélé spatialement.
- Le mélange instantané de sources bruitées est considéré comme un mélange surdéterminé car le nombre de sources est supérieur au nombre de capteurs. Les algorithmes JADE, COM1, COM2, S3C2 connus de l'Homme du métier et le procédé selon l'invention à l'ordre 6 sont mis en oeuvre afin d'identifier de manière autodidacte le mélange surdéterminé $A$.
- Le critère de performances $\alpha_p$, défini par l'équation (18), est calculé sur 200 réalisations et ce pour chaque source $p$ ($1 \leq p \leq 3$) : il va ainsi permettre la comparaison des cinq méthodes.

Sous les hypothèses précédentes, la figure 5 montre les variations de la quantité $\alpha_3$ à la sortie des algorithmes JADE, COM1, COM2, S3C2 et le procédé selon l'invention BIRTH en fonction du nombre d'échantillons. Le procédé selon l'invention permet d'identifier le vecteur directeur en question contrairement aux méthodes de l'art antérieur.

La figure 6 montre, dans le même contexte, les variations du triplet D($A$, $\hat{A}$) = ($\alpha_1$, $\alpha_2$, $\alpha_3$), associé au procédé selon l'invention à l'ordre 6, en fonction du nombre d'échantillons. Les trois coefficients $\alpha_p$ décroissent rapidement vers zéro à mesure que le nombre d'échantillons augmente.

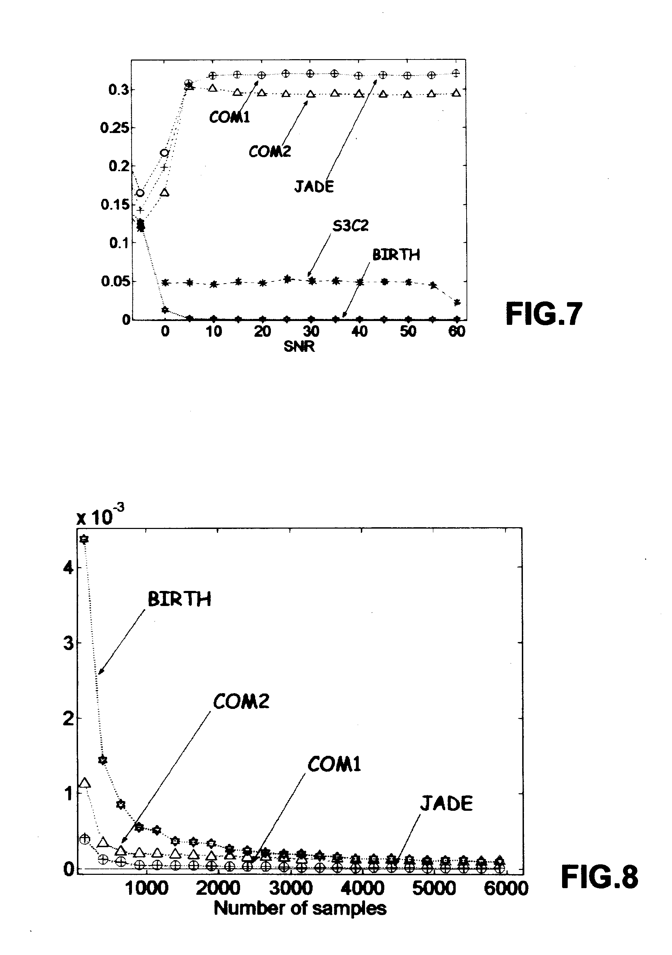

La figure 7 présente les variations de la quantité $\alpha_3$ à la sortie des méthodes selon l'art antérieur JADE, COM1, COM2, S3C2 et le procédé selon l'invention en fonction, cette fois, du rapport signal sur bruit (SNR) de la source 3. La méthode BIRTH, parvient parfaitement à identifier le vecteur directeur de la source 3 même pour une faible valeur de SNR.

Finalement, supposons que les $P$ = 3 sources précédentes soient reçues sur un réseau circulaire de $N$ = 3 capteurs tel que $R/\lambda$ = 0.55.

La figure 8 montre alors les variations de la quantité $\alpha_3$ à la sortie des algorithmes JADE, COM1, COM2 et BIRTH en fonction du nombre d'échantillons : l'algorithme BIRTH fonctionne également en contexte *surdéterminé,* c'est-à-dire lorsque le nombre de sources est inférieur au nombre de capteurs, et bien que des cumulants d'ordre 6 des observations doivent être estimés, la vitesse de convergence de BIRTH est du même ordre de grandeur que celle des méthodes citées plus haut.

**Bibliographie :**

- [1] P. COMON, "Independent Component Analysis, a new concept?" *Signal Processing, Elsevier,* vol. 36, no. 3, pp. 287-314, April 1994.
- [2] J.-F. CARDOSO and A. SOULOUMIAC, "Blind beamforming for non-gaussian signals," *IEE Proceedings-F,* vol.

140, no. 6, pp. 362-370, December 1993.

- [3] H. HYVARINEN and E. OJA, "A fast fixed-point algorithm for independent component analysis," Neural *Computation,* vol. 9, no. 7, pp. 1483-1492, 1997.
- [4] E. BINGHAM and H. HYVARINEN, "A fast fixed-point algorithm for independent component analysis of complex valued signals," *Int. J. of Neural Systems,* vol. 10, no. 1, pp. 1-8, 2000.
- [5] P. COMON, "From source séparation to blind equalization, contrast-based approaches," in *ICISP 01, Int. Conf. on Image and Signal Processing,* Agadir, Morocco, May 3-5 2001, pp. 20-32.
- [6] N. THIRION and E. MOREAU, "New criteria for blind signal separation," in *IEEE Workshop on Statistical Signal and Array Processing,* Pennsylvania, US, August 2000, pp. 344-348.
- [7] T. W. LEE, M. S. LEWICKI, M. GIROLAMI, and T. J. SEJNOWSKI, "Blind source separation of more sources than mixtures using overcomplete representations," IEEE Signal Processing Letters, vol. 6, no. 4, pp. 87-90, April 1999.
- [8] P. COMON and O. GRELLIER, "Non-linear inversion of underdetermined mixtures," in ICA 99, IEEE Workshop on Indep. Comp. Anal. and Signal Separation, Aussois, France, January 11-15 1999, pp. 461-465.
- [9] J. F. CARDOSO, "Super-symetric decomposition of the fourth-order cumulant tensor. Blind identification of more sources than sensors," in ICASSP 91, Toronto, Canada, May 1991, pp. 3109-3112.
- [10] P. COMON, "Blind channel identification and extraction of more sources than sensors," in SPIE Conference, San Diego, US, July 19-24 1998, pp. 2-13.
- [11] L. DeLATHAUWER, P. COMON, and B. DeMOOR, "Ica algorithms for 3 sources and 2 sensors," in Sixth Sig. Proc. Workshop on Higher Order Statistics, Caesarea, Israel, June 14-16 1999, pp. 116-117.
- [12] A. TALEB, "An algorithm for the blind identification of N independent signal with 2 sensors," in ISSPA 01, sixteenth symposium on signal processing and its applications, Kuala-Lumpur, Malaysia, August 13-16 2001.
- [13] A. FERREOL, P. CHEVALIER, and L. ALBERA, demande de brevet intitulé "Procédé de traitement d'antennes sur des signaux cyclostationnaires potentiellement non centrés," au nom de THALES, sous le no. d'enregistrement national 02 05575, déposé le 3 mai 2002.
- [14] A. FERREOL, P. CHEVALIER, and L. ALBERA, "Higher order blind séparation of non zero-mean cyclostationary sources," in *EUSIPCO 02, XI European Signal Processing Conference,* Toulouse, France, September 3-6 2002, pp. 103-106.
- [15] L. ALBERA and P. COMON, "Asymptotic performance of contrast-based blind source separation algorithms," in *SAM 02, Second IEEE Sensor Array and Multichannel Signal Processing Workshop,* Rosslyn, US, August 4-6 2002.
- [16] S. M. SPOONER and W. A. GARDNER, "The cumulant theory of cyclostationary time-series, Part. II : Development and applications," IEEE Transactions on Signal Processing, vol. 42, no. 12, pp. 3409-3429, December 1994.
- [17] P. CHEVALIER, "Optimal separation of independent narrow-band sources : Concept and Performances" Signal Processing, Elsevier, vol. 73, pp. 27-47
- [18] P. CHEVALIER, G. BENOIT, A. FERREOL, "DF after Blind Identification of the source steering vectors : the Blind-Maxcor and Blind-MUSIC methods", *Proc. EUSIPCO,* Triestre (Italy), pp 2097-2100, Sept. 1996.

## Revendications

1. Procédé d'identification aveugle de sources au sein d'un système comportant P sources et N capteurs **caractérisé en ce qu'**il comporte au moins une étape d'identification de la matrice des vecteurs directeurs des sources à partir de l'information propre aux vecteurs directeurs $\mathbf{a}_p$ des sources contenue de manière redondante dans les statistiques circulaires d'ordre m=2q du vecteur des observations reçues par les N capteurs.

2. Procédé selon la revendication 1 **caractérisé en ce que** les statistiques circulaires d'ordre m = 2q s'expriment en fonction d'une matrice diagonale de rang plein des autocumulants des sources et d'une matrice représentant la juxtaposition des vecteurs directeurs des sources de la manière suivante :

$$C_{m,x} = A_q \ \zeta_{m,s} \ A_q^{\,H} \tag{11}$$

où $\zeta_{m,s} = \mathrm{diag}([C_{1,1,...,1,s}^{1,1,...,1} ,..., C_{P,P,...,P,s}^{P,P,...,P}])$ est la matrice diagonale de rang plein des autocumulants $C_{p,p,...,p,s}^{p,p,...,p}$ d'ordre m = 2q des sources, de taille $(P \times P)$, et où $A_q = [a_1^{\otimes(q-1)} \otimes a_1^{*} .....a_p^{\otimes(q-1)} \otimes a_p^{*}]$, de taille $(N^q \times P)$ et supposée de rang plein, représente la juxtaposition des $P$ vecteurs colonnes $[a_p^{\otimes(q-1)} \otimes a_p^*]$.

**3.** Procédé selon l'une des revendications 1 et 2 **caractérisé en ce qu'**il comporte au moins les étapes suivantes :

$\underline{0}$ : construire, à partir des différents vecteurs d'observations $x(t)$, une estimée $\hat{C}_{m,x}$ de la matrice de statistiques $\overline{C}_{m,x}$ des observations,

$\underline{1}$ : décomposer en valeurs singulières la matrice $\hat{C}_{m,x}$, en déduire une estimée $\hat{P}$ du nombre de sources $P$ et une racine carrée $\hat{C}_{m,x}^{1/2}$ de $\hat{C}_{m,x}$, par exemple en prenant $\hat{C}_{m,x}^{1/2} = E_s |L_s|^{1/2}$ où $|\cdot|$ désigne l'opérateur valeur absolue, où $L_s$ et $E_s$ sont respectivement la matrice diagonale des $P$ plus grandes (en valeur absolue) valeurs propres réelles de $C_{m,x}$ et la matrice des vecteurs propres orthonormés associés ;

$\underline{2}$ : extraire de la matrice $\hat{C}_{m,x}^{1/2} = [\Gamma_{1T}, ..., \Gamma_{NT}]^T$ les $N$ blocs matriciels $\Gamma_n$ : chaque bloc $\Gamma_n$ de taille $(N^{(q-1)} \times P)$ est constitué des $N^{(q-1)}$ lignes successives de $\hat{C}_{m,x}^{1/2}$ à compter de la « $N^{(q-1)} (n-1)+1$ »-ième ;

$\underline{3}$ : construire les $N(N-1)$ matrices $\Theta_{n1,n2}$ définies, pour tous $1 \le n_1 \ne n_2 \le N$, par $\Theta_{n1,n2} = \Gamma_{n1}^{\#} \Gamma_{n2}$ ;

$\underline{4}$ : déterminer la matrice $V_{sol}$, solution au problème de diagonalisation conjointe des $N(N-1)$ matrices $\Theta_{n1,n2}$;

$\underline{5}$ : pour chacune des $P$ colo nnes $b_p$ de $\hat{A}_q$, extraire les $K = N^{(q-2)}$ vecteurs $b_p(k)$ empilés les uns en dessous des autres dans le vecteur $b_p = [b_p(1)^T, b_p(2)^T, ..., b_p(K)^T]^T$;

$\underline{6}$ : convertir les dits vecteurs colonne $b_p(k)$ de taille $(N^2 \times 1)$ en matrice $B_p(k)$ de taille $(N \times N)$ ;

$\underline{7}$ : Décomposer conjointement en valeurs singulières ou diagonaliser conjointement les $K = N^{(q-2)}$ matrices $B_p(k)$ en et retenir comme estimée d'un des vecteurs colonnes de $A$, le vecteur propre commun aux $K$ matrices $B_p(k)$ associé à la plus forte (en module) valeur propre ;

$\underline{8}$ : répéter les étapes 5 à 7 pour chacune des $P$ colonnes de $\hat{A}_q$ afin d'estimer, dans le désordre et à une phase près, les $P$ vecteurs directeurs $a_p$ et donc, à une matrice triviale unitaire près, la matrice de mélange $A$..

**4.** Procédé selon l'une des revendications 1 à 3 **caractérisé en ce que** le nombre de capteurs N est supérieur ou égal au nombre de sources P et **en ce qu'**il comporte une étape d'extraction des sources consistant à appliquer aux observations $x(t)$ un filtre construit à l'aide de l'estimée $\hat{A}$ de $A$ .

**5.** Procédé selon l'une des revendications 2 à 4 **caractérisé en ce que** $C_{m,x}$ est égale à la matrice de quadricovariance Qx et **en ce que** m = 4.

**6.** Procédé selon l'une des revendications 2 à 4 **caractérisé en ce que** $C_{m,x}$ est égale à la matrice d'hexacovariance Hx et **en ce que** m = 6.

**7.** Procédé selon l'une des revendications 1 à 6 **caractérisé en ce qu'**il comporte une étape d'évaluation de la qualité de l'identification du vecteur directeur associé en utilisant un critère tel que

$$D(A, \hat{A}) = (\alpha_1, \alpha_2, ....., \alpha_P)$$

où

$$\alpha_p = \min_{1 \le i \le P} [d(a_p, \hat{a}_i)] \qquad (17)$$

et où $d(u,v)$ est la pseudo-distance entre les vecteurs $u$ et $v,$ tel que :

$$d(\boldsymbol{u}, \boldsymbol{v}) = 1 - \frac{\left|\boldsymbol{u}^{\mathrm{H}}\boldsymbol{v}\right|^2}{\left(\boldsymbol{u}^{\mathrm{H}}\boldsymbol{u}\right)\left(\boldsymbol{v}^{\mathrm{H}}\boldsymbol{v}\right)} \qquad (18)$$

**8.** Utilisation du procédé selon l'une des revendications 1 à 7 à un réseau de communication.

**9.** Utilisation du procédé selon l'une des revendications 1 à 7 pour de la goniométrie à partir des vecteurs directeurs identifiés.

EP 1 477 907 A1

```
x (f) ⟹  ┌─────────────────────────┐      ┌─────────────────────┐      ┌──────────────────────┐
          │ Estimation des statistiques │  ⟹  │ Calcul d'une racine │  ⟹  │ Extraction des N     │
          │ circulaires d'ordre m       │      │ carré Ĉ^½_{m,x} de  │      │ blocs matriciels Γ_n │
          │                             │      │ Ĉ_{m,x}             │      │                      │
          │         Ĉ_{m,x}             │      │                     │      │ constituant Ĉ^½_{m,x}│
          └─────────────────────────┘      └─────────────────────┘      └──────────────────────┘
```

Estimation du nombre de sources $P$

Uniquement si le *mélange* est *surdéterminé*

Que le *mélange* soit *sous-déterminé* ou bien *surdéterminé*

Construction des N (N-1) matrices $\Theta_{n1,n2}$ à partir des matrices $\Gamma_n$

Calcul de l'estimée $\hat{A}$ de la matrice de mélange $A$

Calcul de l'estimée $\hat{A}_m$ de $A_m$

Diagonalisation conjointe des matrices $\Theta_{n1,n2}$

$\hat{s}(f)$

# FIG.1

FIG.2

FIG.3

FIG.4

FIG.5

FIG.6

**FIG.7**

**FIG.8**

**Office européen des brevets**

## RAPPORT PARTIEL
## DE RECHERCHE EUROPEENNE

qui selon la règle 45 de la Convention sur le brevet européen est consideré, aux fins de la procédure ultérieure, comme le rapport de la recherche européenne

Numéro de la demande

EP 04 10 1348

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | P. COMON: "Tensor Decompositions State of the Art and Applications" IMA PROCEEDINGS OF THE CONFERENCE ON MATHEMATICS IN SIGNAL PROCESSING, 18 décembre 2000 (2000-12-18), - 20 décembre 2000 (2000-12-20) pages 1-6, XP002267065 Warwick, UK * page 5, colonne de gauche, ligne 18 - colonne de droite, ligne 11-* * page 2, colonne de gauche, ligne 12 - page 3, colonne de droite, ligne 10 * * page 1, colonne de gauche, ligne 11 - ligne 33 * ----- -/-- | 1-7 | G06F17/18 G06F17/16 |

**DOMAINES TECHNIQUES RECHERCHES (Int.Cl.7)**

G06F

### RECHERCHE INCOMPLETE

La division de la recherche estime que la présente demande de brevet, ou une ou plusieurs revendications, ne sont pas conformes aux dispositions de la CBE au point qu'une recherche significative sur l'état de la technique ne peut être effectuée, ou seulement partiellement, au regard de ces revendications.

Revendications ayant fait l'objet d'une recherche complète:

Revendications ayant fait l'objet d'une recherche incomplète:

Revendications n'ayant pas fait l'objet d'une recherche:

Raison pour la limitation de la recherche:

voir feuille supplémentaire C

| Lieu de la recherche | Date d'achèvement de la recherche | Examinateur |
|---|---|---|
| Munich | 16 juin 2004 | Barba, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C08)

**Office européen**
**des brevets**

**RECHERCHE INCOMPLETE**
**FEUILLE SUPPLEMENTAIRE C**

Numéro de la demande

EP 04 10 1348

Revendications ayant fait l'objet de recherches complètes:
1-7

Revendications n'ayant pas fait l'objet de recherches:
8, 9

Raison pour la limitation de la recherche:

Les revendications 8 et 9 présentes ont trait à une très grande variété de possibilités. En fait, les revendications contiennent tant d'options, de permutations possibles et de conditions que le manque de clarté et de concision au sens de l'Article 84 CBE qui s'en suit, est d'une importance telle qu'une recherche significative de l'objet des revendications devient impossible.

**Office européen**
**des brevets**

**RAPPORT PARTIEL**
**DE RECHERCHE EUROPEENNE**

Numero de la demande

EP 04 10 1348

| | DOCUMENTS CONSIDERES COMME PERTINENTS | | CLASSEMENT DE LA DEMANDE (Int.Cl.7) |
|---|---|---|---|
| Catégorie | Citation du document avec indication, en cas de besoin, des parties pertinentes | Revendication concernée | |
| A | P. COMON: "Independent Component Analysis, Contrasts, and Convolutive Mixtures" IMA PROCEEDINGS OF THE CONFERENCE ON MATHEMATICS IN COMMUNICATIONS II, 16 décembre 2002 (2002-12-16), - 18 décembre 2002 (2002-12-18) pages 1-8, XP002267066 Lancaster University, UK * page 6, colonne de droite, ligne 25 - page 7, colonne de gauche, ligne 31 * * page 5, colonne de gauche, ligne 30 - page 6, colonne de gauche, ligne 21 * * page 3, colonne de gauche, ligne 30 - colonne de droite, ligne 18 * ----- | 1-7 | |
| A | COMON P ET AL: "Blind separation of independent sources from convolutive mixtures" IEICE TRANSACTIONS ON FUNDAMENTALS OF ELECTRONICS, COMMUNICATIONS AND COMPUTER SCIENCES, MARCH 2003, INST. ELECTRON. INF. & COMMUN. ENG, JAPAN, vol. E86-A, no. 3, mars 2003 (2003-03), pages 542-549, XP002267067 ISSN: 0916-8508 * page 548, colonne de droite, ligne 31 - page 549, colonne de gauche, ligne 9 * * page 548, colonne de gauche, ligne 1 - colonne de droite, ligne 9 * * page 546, colonne de droite, ligne 5 - ligne 28 * * page 542, colonne de gauche, ligne 16 - page 545, colonne de droite, ligne 36 * ----- -/-- | 1-7 | DOMAINES TECHNIQUES RECHERCHES (Int.Cl.7) |

EPO FORM 1503 03.82 (P04C11)

EP 1 477 907 A1

Office européen
des brevets

**RAPPORT PARTIEL
DE RECHERCHE EUROPEENNE**

Numero de la demande

EP 04 10 1348

| | DOCUMENTS CONSIDERES COMME PERTINENTS | | | CLASSEMENT DE LA DEMANDE (Int.Cl.7) |
|---|---|---|---|---|
| Catégorie | Citation du document avec indication, en cas de besoin, des parties pertinentes | Revendication concernée | | |
| A | P. COMON: "Block Methods for Channel Identification and Source Separation" IEEE SYMPOSIUM ON ADAPT. SYST. SIG. PROC. COMM. CONTR., octobre 2000 (2000-10), pages 87-92, XP002267068 Lake Louise, Alberta, Canada * page 91, colonne de gauche, ligne 22 - ligne 42 * * page 89, colonne de gauche, ligne 46 - page 91, colonne de gauche, ligne 7 * * page 88, colonne de gauche, ligne 12 - page 89, colonne de gauche, ligne 14 * ----- | 1-7 | | |
| A | BOURENNANE S ET AL: "Fast wideband source separation based on higher-order statistics" PROCEEDINGS OF THE IEEE SIGNAL PROCESSING WORKSHOP ON HIGHER-ORDER STATISTICS (CAT. NO.97TB100151), PROCEEDINGS OF THE IEEE SIGNAL PROCESSING WORKSHOP ON HIGHER-ORDER STATISTICS, BANFF, ALTA., CANADA, 21-23 JULY 1997, 1996, pages 354-358, XP002267069 1997, Los Alamitos, CA, USA, IEEE Comput. Soc, USA ISBN: 0-8186-8005-9 * page 357, colonne de droite, ligne 8 - page 358, colonne de gauche, ligne 5 * * page 355, colonne de gauche, ligne 27 - page 356, colonne de droite, ligne 7 * * page 354, colonne de gauche, ligne 17 - page 355, colonne de gauche, ligne 25 * ----- -/-- | 1-7 | DOMAINES TECHNIQUES RECHERCHES (Int.Cl.7) | |

EPO FORM 1503 03.82 (P04C11)

Office européen
des brevets

**RAPPORT PARTIEL
DE RECHERCHE EUROPEENNE**

Numero de la demande

EP 04 10 1348

| | **DOCUMENTS CONSIDERES COMME PERTINENTS** | | CLASSEMENT DE LA DEMANDE (Int.Cl.7) |
|---|---|---|---|
| Catégorie | Citation du document avec indication, en cas de besoin, des parties pertinentes | Revendication concernée | |
| A | SERVIERE C: "Blind source separation of convolutive mixtures" PROCEEDINGS. 8TH IEEE SIGNAL PROCESSING WORKSHOP ON STATISTICAL SIGNAL AND ARRAY PROCESSING (CAT. NO.96TB100040), PROCEEDINGS OF 8TH WORKSHOP ON STATISTICAL SIGNAL AND ARRAY PROCESSING, CORFU, GREECE, 24-26 JUNE 1996, 1996, pages 316-319, XP002267070 1996, Los Alamitos, CA, USA, IEEE Comput. Soc. Press, USA ISBN: 0-8186-7576-4 * page 318, colonne de gauche, ligne 22 - page 319, colonne de gauche, ligne 12 * * page 316, colonne de droite, ligne 32 - page 317, colonne de droite, ligne 12 * * page 316, colonne de gauche, ligne 13 - colonne de droite, ligne 15 * ----- | 1-7 | DOMAINES TECHNIQUES RECHERCHES (Int.Cl.7) |
| A | TE-WON LEE ET AL: "Blind source separation of more sources than mixtures using overcomplete representations" IEEE SIGNAL PROCESSING LETTERS, APRIL 1999, IEEE, USA, vol. 6, no. 4, 1999, pages 87-90, XP002267071 ISSN: 1070-9908 * le document en entier * ----- | 1-7 | |

EPO FORM 1503 03.82 (P04C11)